# EUROPEAN PATENT APPLICATION

(11) **EP 3 013 062 A1**
(43) Date of publication of application: **27.04.2016**
(21) Application number: 14814222.7
(22) Date of filing: 19.06.2014
(51) Int. Cl.: H04N 21/4402, H04N 7/015

(54) **SIGNAL TRANSMITTING AND RECEIVING DEVICE AND METHOD OF CONTROLLING SAID DEVICE**

(30) Priority: 19.06.2013 US 201361836662 P
(71) Applicant: LG Electronics Inc., Yeongdeungpo-gu, Seoul 150-721 (KR)
(72) Inventor: HWANG, Soojin, Seoul 137-893 (KR); OH, Hyunmook, Seoul 137-893 (KR); SUH, Jongyeul, Seoul 137-893 (KR)
(74) Representative: Frenkel, Matthias Alexander
(86) International application number: PCT/KR2014/005408
(87) International publication number: WO 2014/204227

(57) **Abstract**

Abstract: A signal transmitting and receiving device and a method of controlling the signal transmitting and receiving device are disclosed. The method of controlling the signal transmitting and receiving device includes de-multiplexing a stream including video data and signaling information, decoding de-multiplexed signaling information and video data, and extracting information on a crop region from decoded signaling information. The signal transmitting and receiving device includes a de-multiplexing unit de-multiplexing a stream including video data and signaling information, a signaling information decoding unit decoding de-multiplexed signaling information, a video decoder decoding video data in a de-multiplexed video stream, a control unit extracting information on a crop region from decoded signaling information, and a display unit.

## Description

### [Technical Field]

The present invention relates to a signal transmission/reception device, and a method of controlling the signal transmission/reception device.

### [Background Art]

With increase in video signal processing speed, research has been conducted on a technology for transmitting and receiving ultra high definition (UHD) video. UHD video has a higher resolution that that of existing HD video since a wide region is photographed. Since UHD video has a high resolution, UHD video may be displayed using a reception device having a wider screen. In addition, with development of communication and electronic technologies, portable personal terminal devices have been supplied, and a second terminal device has been drawing attention.

The existing system information (SI) standard does not include a UHD broadcast service scenario. However, there is need for a method of displaying UHD video on a second terminal device such as a personal terminal device, a method of configuring a wide screen of a reception device using UHD video data, etc.

In this regard, there is a need for signaling information for cropping a region of interest (ROI) in UHD video and displaying the ROI on a second terminal device such as a smartphone or a tablet personal computer (PC). In addition, there is need for signaling information for reconfiguring and displaying the cropped ROI or enabling another signal reception device having a different aspect ratio from that of UHD video to process a surplus region.

### [Disclosure]

### [Technical Problem]

An object of the present invention devised to solve the problem lies in providing a signal transmission/reception device capable of cropping a partial region of UHD video and displaying the partial region on a second terminal device, and a method of controlling the signal transmission/reception device.

Another object of the present invention is to provide a signal transmission/reception device capable of reconfiguring a screen using a plurality of cropped regions, and a method of controlling the signal transmission/reception device.

Another object of the present invention is to provide a signal transmission/reception device capable of displaying additional video in a surplus region of a display device having an aspect ratio of 21:9, and a method of controlling the signal transmission/reception device.

### [Technical Solution]

The object of the present invention can be achieved by providing a method of controlling a signal reception device, including demultiplexing a stream including video data and signaling information, decoding the demultiplexed signaling information and the video data, and extracting information about a crop region from the decoded signaling information.

The information about the crop region may include information indicating the number of crop regions and whether a frame is an initial frame, and include information indicating reference coordinates of the crop region or information indicating a difference value with respect to the reference coordinates.

The method may further include receiving display information of a second terminal device including aspect ratio information, cropping the decoded video data using the extracted information about the crop region, and transmitting a cropped region of the decoded video data to the second terminal device.

The method may further include comparing the received aspect ratio information with an aspect ratio of the crop region, and inserting an AFD bar into a predetermined region when the received aspect ratio information is different from the aspect ratio of the crop region.

The method may further include converting a format of the video data based on the received display information of the second terminal device.

The format of the video data may include at least one of frame rate, bit depth, and chroma sampling values.

A plurality of crop regions may be present, wherein the method may further include outputting a selection screen for outputting one crop region from among the plurality of crop regions.

The method may further include cropping at least one region of the decoded video data using the extracted information about the crop region, and dividing a display unit when an aspect ratio of the display unit is 16:9, and displaying the at least one cropped region.

The method may further include cropping at least one region of the decoded video data using the extracted information about the crop region, and outputting the decoded video data and the at least one cropped region, wherein the outputting may include dividing a display unit into a main region and an additional region to output the decoded video data in the main region and output the at least one cropped region in the additional region when an aspect ratio of the display unit is 21:9.

In another aspect of the present invention, provided herein is a method of controlling a signal transmission device, including encoding video data, configuring a crop region in the video data to generate signaling information including information about the crop region, and multiplexing the encoded video data and the signaling information, and transmitting the multiplexed video data and signaling information.

In another aspect of the present invention, provided herein is a demultiplexer for demultiplexing a stream including video data and signaling information, a signaling information decoder for decoding the demultiplexed signaling information, a video decoder for decoding the video data in the demultiplexed stream, a controller for extracting information about a crop region from the decoded signaling information, and a display unit.

The information about the crop region may include information indicating the number of crop regions and whether a frame is an initial frame, and include information indicating reference coordinates of the crop region or information indicating a difference value with respect to the reference coordinates.

The signal reception device may further include a communication unit for receiving display information of a second terminal device including aspect ratio information, wherein the controller may crop the decoded video data using the extracted information about the crop region, and the communication unit may transmit a cropped region of the decoded video data to the second terminal device.

The controller may compare the received aspect ratio information with an aspect ratio of the crop region, and insert an AFD bar into a predetermined region when the received aspect ratio information is different from the aspect ratio of the crop region.

The controller may convert a format of the video data based on the received display information of the second terminal device.

The format of the video data may include at least one of frame rate, bit depth, and chroma sampling values.

A plurality of crop regions may be present, wherein the controller may control the display unit to output a selection screen for outputting one crop region from among the plurality of crop regions.

The controller may crop at least one region of the decoded video data using the extracted information about the crop region, divide the display unit when an aspect ratio of the display unit is 16:9, and control the display unit to output the at least one cropped region.

The controller may crop at least one region of the decoded video data using the extracted information about the crop region, and divide the display unit into a main region and an additional region to control the display unit to output the decoded video data in the main region and output the at least one cropped region in the additional region when an aspect ratio of the display unit is 21:9.

In another aspect of the present invention, provided herein is a signal transmission device including an encoder for encoding video data, a signaling information generator for configuring a crop region in the video data, and generating signaling information including information about the crop region, a multiplexer for multiplexing the encoded video data and the signaling information, and a communication unit for transmitting the multiplexed video data and signaling information.

### [Advantageous Effects]

According to embodiments of the present invention, it is possible to provide video of an ROI using a second terminal device or a signal reception device without a separate stream.

According to embodiments of the present invention, it is possible to display an ROI in video provided on a UHD channel using a second terminal device.

According to embodiments of the present invention, it is possible to display several parts of particular video on a signal reception device without allocation of a separate channel.

According to embodiments of the present invention, it is possible to efficiently use a screen when viewing UHD video having different aspect ratio from that of a signal reception device.

### [Description of Drawings]

FIG. 1 is a diagram illustrating a method of displaying cropped video on a second terminal device according to an embodiment of the present invention.
FIG. 2 is a flowchart illustrating the method of displaying the cropped video on the second terminal device according to the embodiment of the present invention.
FIG. 3 is a diagram illustrating a method of displaying cropped video on a second terminal device according to another embodiment of the present invention.
FIG. 4 is a flowchart illustrating the method of displaying the cropped video on the second terminal device according to the other embodiment of the present invention.
FIG. 5 is a diagram illustrating a method of configuring crop video to be transmitted to the second terminal device according to an embodiment of the present invention.
FIG. 6 is a diagram illustrating a method of reconfiguring and displaying a plurality of cropped videos according to an embodiment of the present invention.
FIG. 7 is a flowchart illustrating the method of reconfiguring and displaying the plurality of cropped videos according to the embodiment of the present invention.
FIG. 8 is a diagram illustrating a method of displaying video cropped in a surplus region of a 21:9 signal reception device according to an embodiment of the present invention.
FIG. 9 is a flowchart illustrating the method of displaying the video cropped in the surplus region of the 21:9 signal reception device according to the embodiment of the present invention.
FIG. 10 is a diagram illustrating SEI signaling information according to an embodiment of the present invention.
FIG. 11 is a diagram illustrating a method of signaling cropped video information according to an embodiment of the present invention.
FIG. 12 is a diagram illustrating a method of signaling resolution information of cropped video according to an embodiment of the present invention.
FIG. 13 is a diagram illustrating a method of signaling information for displaying cropped video on a second terminal device according to an embodiment of the present invention.
FIG. 14 is a diagram illustrating a method of signaling information for displaying a plurality of cropped videos on a second terminal device according to an embodiment of the present invention.
FIG. 15 is a diagram illustrating a method of signaling information for reconfiguring and displaying a plurality of cropped videos according to an embodiment of the present invention.
FIG. 16 is a diagram illustrating a method of signaling information for displaying video cropped in a surplus region of a 21:9 signal reception device according to an embodiment of the present invention.
FIGS. 17 and 18 are diagrams illustrating an example of a PES packet.
FIG. 19 is a flowchart illustrating a method of processing and displaying cropped video according to an embodiment of the present invention.
FIG. 20 is a flowchart illustrating a method of controlling a signal transmission device according to an embodiment of the present invention.
FIG. 21 is a flowchart illustrating a method of controlling a signal reception device according to an embodiment of the present invention.
FIG. 22 is a block diagram illustrating the signal transmission device according to an embodiment of the present invention.
FIG. 23 is a block diagram illustrating the signal reception device according to an embodiment of the present invention.

### [Best Mode]

Hereinafter, preferred embodiments of the present invention, which can specifically implement the above-described objects, will be described with reference to the accompanying drawings. In this instance, configurations and effects of the present invention illustrated in the drawings and described with reference to the drawings are described as at least one embodiment, and the technical spirit, a main configuration, and effect thereof of the present invention are not restricted by the configurations and effects.

Although the terms used in the present invention are selected, as much as possible, from general terms that are widely used at present while taking the functions of the present invention into consideration, these terms may be changed based on intentions of those skilled in the art, customs, emergence of new technologies, or the like. In addition, in a particular case, terms that are arbitrarily selected by the applicant of the present invention may be used. In this case, the meanings of these terms will be described in corresponding description parts of the invention. Accordingly, it should be noted that the terms used herein should be construed based on practical meanings thereof and the whole content of this specification, rather than being simply construed based on names of the terms.

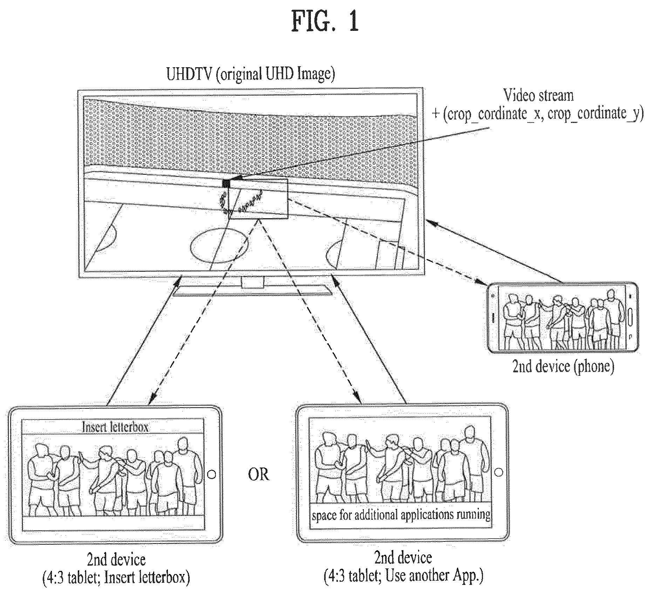

FIG. 1 illustrates a method of displaying cropped video on a second terminal device according to an embodiment of the present invention.

FIG. 1 illustrates a signal reception device (for example, an ultra high definition television (UHDTV)) that displays UHD video, and a second terminal device that displays cropped video. The second terminal device may display video cropped in the signal reception device (or sync device) using one pair of cropped coordinates. Video displayed on the second terminal device may be inserted into a picture in picture (PIP) in the signal reception device. Upon insertion into the PIP, the signal reception device scales cropped region of interest (ROI) video and provides the scaled ROI video in a format of the PIP, thereby enabling a user to view close-up video. An ROI refers to a region in which the user is interested or a region that can be cropped. Therefore, in the present invention, the ROI and a crop region have similar meanings.

The second terminal device may transmit information about a terminal device to the signal reception device. The signal reception device may select a profile and a level based on a specification of the second terminal device and a processing ability of an interface that connects devices, and display video cropped based on the selected profile and level. The signal reception device may perform frame dropping when a frame rate of video is different.

The profile may indicate a profile for a corresponding video stream, that is, a basic specification necessary to decode the stream. For example, the profile may include requirement information for chroma sub-sampling of the video stream (for example, 4:2:0, 4:2:2, etc.), a bit depth (for example, 8 bits or 10 bits), a coding tool, etc. The level may define a level about the video stream, that is, a supported range of a technical element defined in the profile. For example, a resolution, a frame rate, a bit rate, etc. may be included.

For example, when the second terminal device is a tablet PC, the signal reception device may select a medium screen profile from among three profiles (for example, a large screen profile, a medium screen profile, and a small screen profile), and check an aspect ratio. The profiles may be classified based on screen sizes, and aspect ratio information may be calculated from a resolution. When an aspect ratio (even when aspect ratio information is not signaled, the aspect ratio information may be calculated from resolution) of cropped video is 16:9, and an aspect ratio (even when aspect ratio information is not signaled, the aspect ratio information may be calculated from resolution) of the second terminal device is 4:3, a letterbox needs to be inserted. The signal reception device may insert a letterbox into video according to selection of the user, or may shift video to one side, display the video, and use a remaining space as a space for additional application execution. Alternatively, the signal reception device may crop video using start coordinates for cropping according to an aspect ratio of the second terminal device and output the cropped video according to a screen rather than cropping video at an aspect ratio of 16:9.

In other words, a signal transmission device may transmit a stream including UHD video, coordinates for cropping video, and additional information such as a partial crop size, etc. such that the signal reception device displays the UHD video, and the signal reception device may transmit close-up or zoomed-in video to the second terminal device according to a characteristic of each terminal device, and thus another terminal device may receive close-up/zoomed-in video without an additional stream. A characteristic of the second terminal device may be indicated by a classified profile, level, etc. and transmitted.

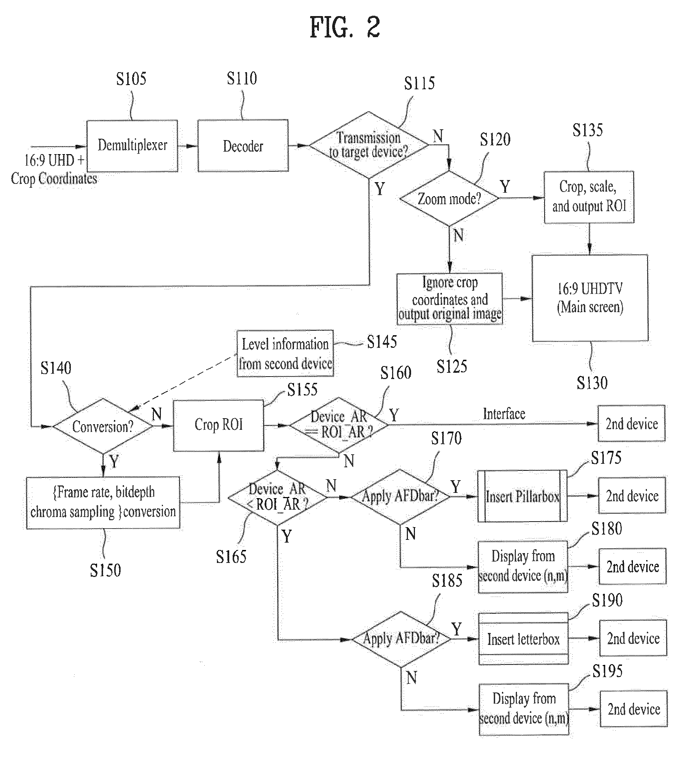

FIG. 2 illustrates a method of displaying cropped video on the second terminal according to an embodiment of the present invention.

FIG. 2 illustrates a method of cropping an ROI of video, and transmitting cropped data to the second terminal device.

The signal reception device may receive a stream including UHD video data and signaling information including crop information such as crop coordinates from the signal transmission device.

In S105, the signal reception device may demultiplex the received stream including the video data and the received signaling information including the crop information. In S110, the signal reception device may decode the demultiplexed signaling information and the video data included in the video stream. In S 115, the signal reception device may determine whether to transmit data to the second terminal device (target device).

When the signal reception device determines not to transmit data to the second terminal device, it is possible to determine whether the signal reception device is in a zoom mode in S120. The zoom mode may indicate that the ROI is cropped and displayed. When the signal reception device is determined not to be in the zoom mode, the crop coordinates may be ignored, and the received UHD video data may be output in S125. In other words, in S130, a 16:9 signal reception device (UHDTV or main screen device) may ignore the crop coordinates and display the UHD video data.

When the signal reception device is determined to be in the zoom mode, the ROI may be cropped and scaled in S135. In other words, when the 16:9 signal reception device (UHDTV or main screen device) is determined to be in the zoom mode, the ROI may be cropped, scaled, and output by applying the crop coordinates in S130.

When the signal reception device determines to transmit data to the second terminal device, the signal reception device may determine whether video data is converted in S140. In S 145, the signal reception device may receive level information from the second terminal device before determining whether the video data is converted. The signal reception device may determine whether the video data is converted based on the received level information. In S150, the signal reception device may convert frame rate, bit depth, and chroma sampling values by detecting interface information and a maximum displayable specification of the second terminal device.

In S155, the signal reception device may crop 16:9 HD video data in UHD video data using one crop coordinate information. In S160, the signal reception device may determine whether an aspect ratio (Device_AR) of the second terminal device is the same as an aspect ratio (ROI_AR) of the cropped ROI. The aspect ratio of the second terminal device may be determined using resolution information transmitted from the second terminal device. In addition, the aspect ratio of the cropped ROI may be calculated from the crop information transmitted from the signal transmission device.

When the aspect ratio of the second terminal device is the same as the aspect ratio of the cropped ROI, the signal reception device may transmit the decoded and cropped video data to the second terminal device through the interface. The second terminal device may output the received video data without change.

When the aspect ratio (Device_AR) of the second terminal device is not the same as the aspect ratio (ROI_AR) of the cropped ROI, the signal reception device may determine a size relation between the aspect ratios. For example, in S165, the size relation between the aspect ratios may be determined based on wideness.

When Device_AR is greater than ROI_AR, the signal reception device may determine whether to apply an AFD bar in S170. For example, Device_AR may be 21:9, and ROI_AR may be 16:9. When the signal reception device determines to apply the AFD bar, pillarboxes may be inserted into right and left sides of the cropped video in S175. When the signal reception device determines not to apply the AFD bar, particular coordinates of the second terminal device may be configured as reference coordinates of the video data in S180. For example, video may be shifted to one side and displayed, and a remaining space may be allocated for additional application execution.

When Device_AR is smaller than ROI_AR, the signal reception device may determine whether to apply the AFD bar in S 185. For example, Device_AR may be 4:3, and ROI_AR may be 16:9. When the signal reception device determines to apply the AFD bar, letterboxes may be inserted into upper and lower sides of the cropped video in S190. When the signal reception device determines not to apply the AFD bar, particular coordinates of the second terminal device may be configured as reference coordinates of the video data in S195. For example, video may be shifted to one side and displayed, and a remaining space may be allocated for additional application execution.

The signal reception device may transmit the decoded and cropped video to the second terminal device through the interface. The second terminal device may display the received video.

UHD video may be displayed on the signal reception device. In addition, a terminal device incapable of decoding the UHD video may receive the decoded and cropped video through the interface and display the received video. The signal reception device may recognize a video specification suitable for the second terminal device through information transmitted from the second terminal device. The signal reception device may transmit video corresponding to a suitable profile and level to the second terminal device.

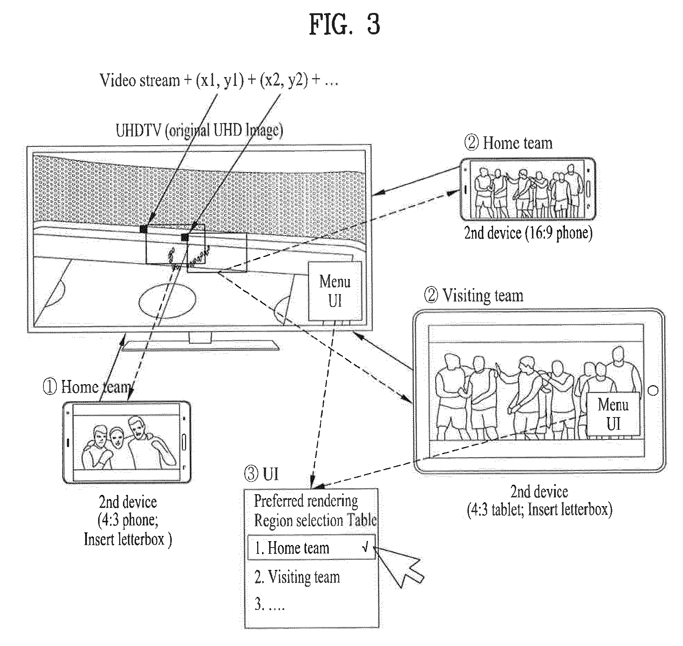

FIG. 3 illustrates a method of displaying cropped video on a second terminal device according to another embodiment of the present invention.

FIG. 3 illustrates a signal reception device capable of cropping a plurality of ROIs. The signal reception device may crop the plurality of ROIs using a plurality of pairs of coordinates, and a selected ROI may be displayed on the second terminal device. An ROI to be cropped may be selected by the signal reception device or the second terminal device. In addition, video displayed on the second terminal device may be inserted into a PIP in the signal reception device.

A signal transmission device may transmit crop coordinates, a number for an ROI (target) to be cropped, screen configuration information, etc. together with a UHD video stream. For example, as illustrated in FIG. 3, when a soccer game image is transmitted, video of a home team may be numbered 1, video of a visiting team may be numbered 2, information about key players may be numbered 3, 4, etc., and the numbered videos and the numbered information may be transmitted together with crop coordinates.

An ROI may be directly selected by the user in the signal reception device or the second terminal device based on crop coordinates and a number. For example, the signal reception device may display a UI including a list of selectable ROIs, and transmit an ROI selected by the user to the second terminal device such that the selected ROI is displayed. Alternatively, the second terminal device may display a UI including a list of selectable ROIs, and receive an ROI selected by the user from the signal reception device to display the received ROI. In some cases, the signal reception device may display a crop region on displayed video, and select an ROI according to a selection command input through a remote controller, etc. The crop region may be distinguished by a color, etc. and displayed.

When the ROI is selected, the second terminal device may transmit information about the second terminal device to the signal reception device, and the signal reception device may deliver uncompressed video according to a specification of the second terminal device or a capacity of an interface that connects devices through the interface. For example, the interface may correspond to a high definition multimedia interface (HDMI), wireless HD (WiHD), Wireless Gigabit (WiGig), a wireless display, HDBaseT, etc.

In addition, when the crop region and the second terminal device have different aspect ratios, a pillarbox or a letterbox may be inserted as described above, and a certain region may be left as a space for additional application execution.

In other words, it is possible to transmit coordinates for cropping a plurality of ROIs in UHD video, numbers for arranging ROIs, configuration information, etc. An ROI may be selected by the user based on the transmitted information, and the selected ROI may be displayed on the second terminal device. A characteristic of the second terminal device may be displayed as a classified profile, level, etc. and transmitted.

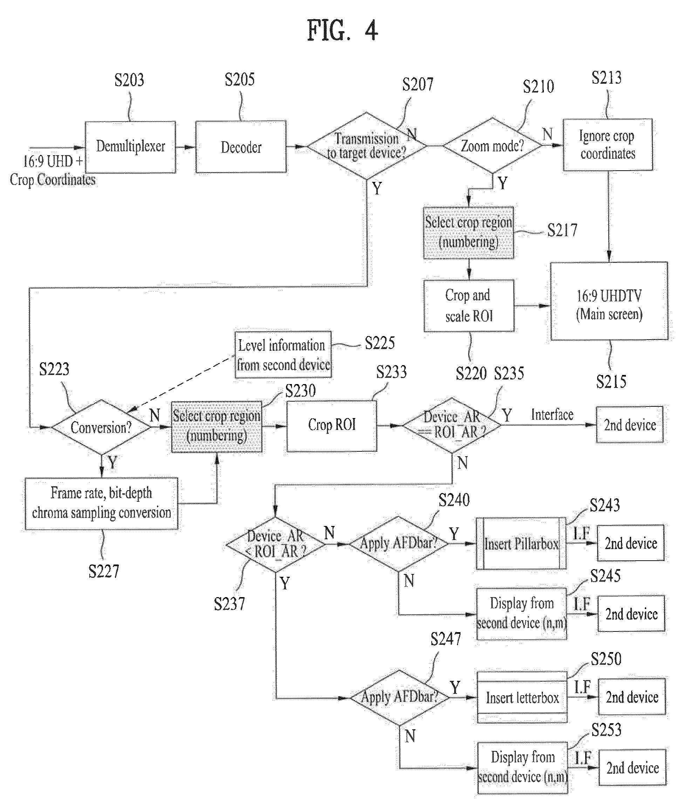

FIG. 4 illustrates a method of displaying cropped video on a second terminal device according to another embodiment of the present invention.

FIG. 4 illustrates a method of cropping one ROI among a plurality of ROIs, and transmitting the cropped data to the second terminal device. A signal reception device may receive a stream including UHD video data and signaling information including crop information such as crop coordinates from a signal transmission device.

In S203, the signal reception device may demultiplex the received stream including the video data and the received signaling information including the crop information. In S205, the signal reception device may decode the demultiplexed signaling information and the video data included in the video stream. The signal reception device may extract information about a crop region from the decoded signaling information. In S207, the signal reception device may determine whether to transmit data to the second terminal device (target device).

When the signal reception device determines not to transmit data to the second terminal device, it is possible to determine whether the signal reception device is in a zoom mode in S210. The zoom mode may be a mode in which the ROI is cropped and displayed. When the signal reception device is determined not to be in the zoom mode, the crop coordinates may be ignored in S213. In S215, a 16:9 signal reception device (UHDTV or main screen device) may ignore the crop coordinates and display the UHD video data.

A plurality of ROIs may be cropped. When the signal reception device is determined to be in the zoom mode, the signal reception device may select a crop region in S217. The crop region may be selected according to a selection command of the user. In S220, the signal reception device may crop and scale the ROIs. When the signal reception device is determined to be in the zoom mode, the signal reception device may crop, scale, and output the ROI by applying the cropped coordinates in S215.

When the signal reception device determines to transmit data to the second terminal device, the signal reception device may determine whether video data is converted in S223. In S225, the signal reception device may receive level information from the second terminal device before determining whether the video data is converted. The signal reception device may determine whether the video data is converted based on the received level information. In S227, the signal reception device may convert frame rate, bit depth, and chroma sampling values by detecting interface information and a maximum displayable specification of the second terminal device. In addition, the signal reception device may perform frame dropping by detecting the interface information and the maximum displayable specification of the second terminal device.

In S230, the signal reception device may select one crop region from among a plurality of regions. For example, the signal reception device may display a UI for selecting a desired region and receive input of a selection command from the user. Alternatively, the second terminal device may display a UI for selecting a desired region and receive input of a selection command from the user. In some cases, the signal reception device may display a region that can be cropped on a screen, and select one crop region according to a selection command of the user using a remote controller, etc.

In S233, the signal reception device may crop a selected ROI using crop coordinate information. In S235, the signal reception device may determine whether an aspect ratio (Device_AR) of the second terminal device is the same as an aspect ratio (ROI_AR) of the cropped ROI. The aspect ratio of the second terminal device may be determined using resolution information transmitted from the second terminal device. In addition, the aspect ratio of the cropped ROI may be calculated from crop information transmitted from the signal transmission device.

When the aspect ratio of the second terminal device is the same as the aspect ratio of the cropped ROI, the signal reception device may transmit the decoded and cropped video data to the second terminal device through the interface. The second terminal device may output the received video data without change.

When the aspect ratio (Device_AR) of the second terminal device is not the same as the aspect ratio (ROI_AR) of the cropped ROI, the signal reception device may determine a size relation between the aspect ratios. For example, in S237, the size relation between the aspect ratios may be determined based on wideness.

When Device_AR is greater than ROI_AR, the signal reception device may determine whether to apply an AFD bar in S240. For example, Device_AR may be 21:9, and ROI_AR may be 16:9. When the signal reception device determines to apply the AFD bar, pillarboxes may be inserted into right and left sides of the cropped video in S243. When the signal reception device determines not to apply the AFD bar, particular coordinates of the second terminal device may be configured as reference coordinates of the video data in S245. For example, video may be shifted to one side and displayed, and a remaining space may be allocated for additional application execution.

When Device_AR is smaller than ROI_AR, the signal reception device may determine whether to apply the AFD bar in S247. For example, Device_AR may be 4:3, and ROI_AR may be 16:9. When the signal reception device determines to apply the AFD bar, letterboxes may be inserted into upper and lower sides of the cropped video in S250. When the signal reception device determines not to apply the AFD bar, particular coordinates of the second terminal device may be configured as reference coordinates of the video data in S253. For example, video may be shifted to one side and displayed, and a remaining space may be allocated for additional application execution.

The signal reception device may transmit the decoded and cropped video to the second terminal device through the interface. The second terminal device may display the received video.

Video of an ROI selected by the user from among a plurality of ROI that can be cropped may be transmitted to the second terminal device. A terminal device that cannot decode UHD video may receive decoded and cropped video through the interface and display the received video. The signal reception device may recognize a video specification suitable for the second terminal device through information transmitted from the second terminal device. The signal reception device may transmit video corresponding to a suitable profile and level to the second terminal device.

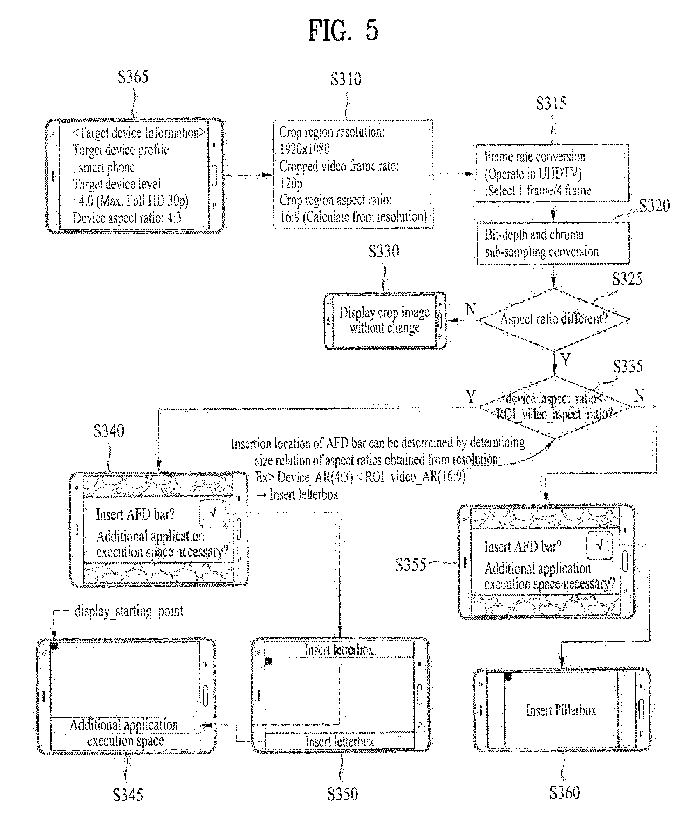

FIG. 5 illustrates a method of configuring cropped video to be transmitted to a second terminal device.

Referring to FIG. 5, in S305, the second terminal device may transmit information about the second terminal device to a signal reception device. Level information and a profile displayable on the second terminal device are required when the signal reception device transmits cropped video to the second terminal device. The level information may be defined similarly to a level used in a codec. In other words, a level may be the same as a level defined in high efficiency video coding (HEVC). For example, level 1 to level 6.2 are defined as video levels in the HEVC standard. Level 1 refers to a specification in which a quarter common intermediate format (QCIF) (176x144) can be decoded at a rate of 15 frames per second, and level 6.2 is defined such that an 8K image can be reproduced at a rate of 120 frames per second.

As an example, the second terminal device may transmit a profile corresponding to a smartphone, level information corresponding to level 4 (Full HD, 30 frames per second), and aspect ratio information corresponding to 4:3 to the signal reception device. In other words, the signal reception device may receive display information of the second terminal device including the aspect ratio information.

In S310, the signal reception device may receive information about video from a signal transmission device. For example, the received information about video may include crop region resolution information corresponding to 1920×1080, crop video frame rate information corresponding to 120 frames per second, and crop region aspect ratio information corresponding to 16:9. Since the video cropped in the signal reception device corresponds to 120 frames per second, and the displayable specification of the second terminal device corresponds to 30 frames per second, frame rate conversion is needed. The signal reception device may crop decoded video data using information about an extracted crop region.

In S315, the signal reception device may convert a frame rate. For example, the signal reception device may convert 4 frames to 1 frame. As a result, frame dropping may occur.

In S320, the signal reception device may convert bit depth and chroma sub-sampling in addition to frame rate. In other words, the signal reception device may convert a format of the video data based on the received display information of the second terminal device. The format of the video data may include at least one of frame rate, bit depth, and chroma sampling.

In S325, the signal reception device may determine whether an aspect ratio of the second terminal device is the same as an aspect ratio of a cropped ROI. When the aspect ratio of the second terminal device is the same as the aspect ratio of the cropped ROI, the signal reception device may transmit the cropped video data to the second terminal device through an interface. In S330, the second terminal device may output the received video data without change.

When the aspect ratio (device_aspect_ratio) of the second terminal device is not the same as the aspect ratio (ROI_video_aspect_ratio) of the cropped ROI, the signal reception device may determine a size relation between the aspect ratios in S335.

When the aspect ratio of the second terminal device is smaller than the aspect ratio of the cropped ROI, the signal reception device may determine whether to apply an AFD bar in S340. For example, the aspect ratio of the second terminal device may be 4:3, and the aspect ratio of the cropped ROI may be 16:9. When the signal reception device determines not to apply the AFD bar, particular coordinates of the second terminal device may be configured as reference coordinates of the video data in S345. For example, video may be shifted to a side and displayed, and a remaining space may be allocated for additional application execution. When the signal reception device determines to apply the AFD bar, letterboxes may be inserted into upper and lower sides of the cropped video in S350.

When the aspect ratio of the second terminal device is greater than the aspect ratio of the cropped ROI, the signal reception device may determine whether to apply the AFD bar in S355. For example, Device_AR may be 21:9, and ROI_AR may be 16:9. When the signal reception device determines to apply the AFD bar, pillarboxes may be inserted into right and left sides of the cropped video in S360. When the signal reception device determines not to apply the AFD bar, particular coordinates of the second terminal device may be configured as reference coordinates of the video data in S345. For example, video may be shifted to a side and displayed, and a remaining space may be allocated for additional application execution. In other words, the signal reception device may compare aspect ratio information of the second terminal device with aspect ratio information of the cropped ROI, and insert the AFD bar into a predetermined region when the aspect ratio information of the second terminal device is different from the aspect ratio information of the cropped ROI.

The signal reception device may transmit a cropped region of the decoded video data to the second terminal device through the interface. The second terminal device may display the received video.

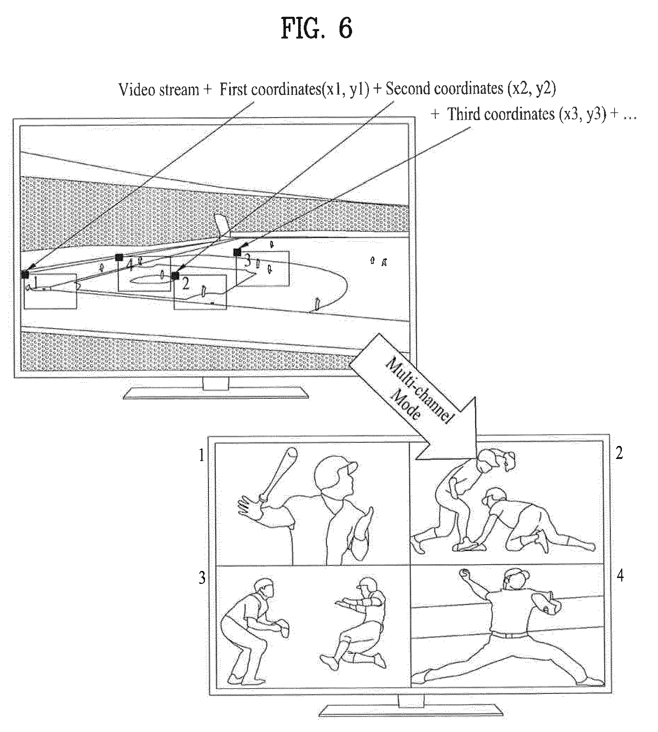

FIG. 6 illustrates a method of reconfiguring and displaying a plurality of cropped videos according to an embodiment of the present invention.

FIG. 6 illustrates a signal reception device for displaying the plurality of cropped videos. As described in the foregoing, each of cropped regions may be added to a whole screen and implemented in a form of a PIP.

The signal reception device may receive several pairs of coordinates for cropping several ROIs from a signal transmission device. Upon receiving input instructing switching to a multi-channel mode, the signal reception device may display a plurality of ROIs at one time. The plurality of ROIs may correspond to regions previously selected by the user or all cropped regions. In other words, the signal reception device may display pictures, which are simultaneously displayed at several places, at one time in a form of a close-up without a separate stream.

Four or more pairs of coordinates or four or less pairs of coordinates may be transmitted by the signal transmission device. Even when the signal transmission device transmits four or more pairs of coordinates, the signal reception device may display four regions configured as defaults, and then change a display screen to a region selected by the user. Alternatively, the signal reception device may configure the number and configurations of regions to be displayed according to user setting. In other words, the signal reception device may display N regions rather than four regions on one screen.

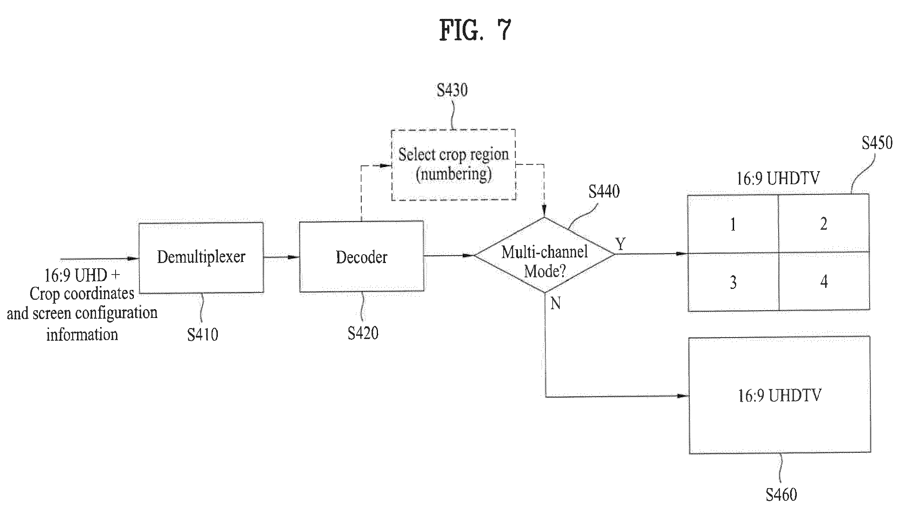

FIG. 7 illustrates a method of reconfiguring and displaying a plurality of cropped videos according to an embodiment of the present invention.

A signal reception device may receive a UHD video stream and M pairs of crop coordinates. Upon receiving a multi-channel conversion command from the user, the signal reception device may divide a display screen into N regions, zoom in on ROIs, and display the ROIs. Cropped ROIs may be configured as initial defaults, and changed by the user. UHD video and videos of N ROIs may be changed and displayed through the multi-channel conversion command.

Referring to FIG. 7, in S410, the signal reception device may demultiplex the received stream including video data and signaling information including crop information. In S420, the signal reception device may decode the demultiplexed signaling information and the video data included in the video stream. For example, the signal reception device may decode the UHD video stream and signaling information including four pairs of crop coordinates. Four or more pairs of crop coordinates or four or less pairs of crop coordinates may be used. The number of pairs of crop coordinates may be determined by a signal transmission device. The crop information may include numbering information for arranging a plurality of pairs of crop coordinates. The signal reception device may extract information about a crop region from the decoded signaling information. In other words, when at least one pair of crop coordinates and a plurality of pairs of crop coordinates are included, the information about the crop region may include numbering information for arranging the plurality of pairs of crop coordinates. In S430, the signal reception device may select the crop region and arrange the crop coordinates using the numbering information.

In S440, the signal reception device may determine whether the signal reception device is in a multi-channel mode. When the signal reception device is in the multi-channel mode, the signal reception device may crop the screen into a 16:9 HD screen using the received M pairs of crop coordinates and display the cropped screen in S450. The signal reception device may display N divided crop region videos in a designated region of the screen of the signal reception device. In other words, the signal reception device may crop at least one region of the decoded video data using the extracted information about the crop region. When an aspect ratio of a display unit is 16:9, the signal reception device may divide the display unit and display the at least one cropped region in a designated region.

When the signal reception device is not in the multi-channel mode, the signal reception device may ignore the crop coordinates and display only the UHD video in S460.

The signal reception device may receive coordinates for cropping ROIs. When the multi-channel mode is executed, the signal reception device may divide a region in the UHD video into several cropped zoomed-in ROIs having the same size to display several divided ROI videos.

When the user desires to view several particular zoomed-in video parts, the signal reception device may display the several particular video parts without allocation of a separate channel.

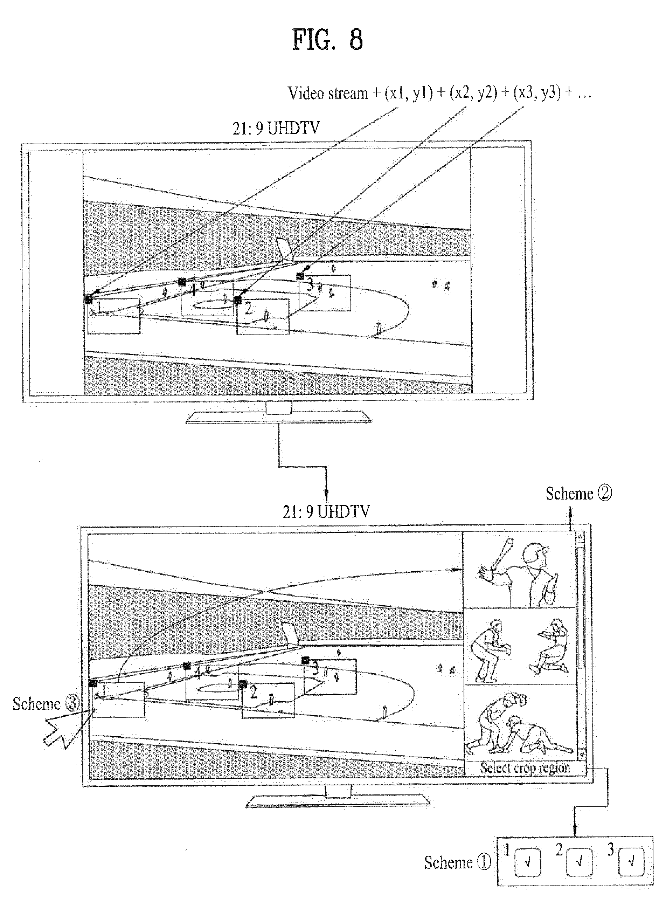

FIG. 8 illustrates a method of displaying video cropped in a surplus region of a 21:9 signal reception device according to an embodiment of the present invention.

FIG. 8 illustrates the signal reception device for displaying a crop region simultaneously with a whole screen. The signal reception device illustrated in FIG. 8 may efficiently use a display region having an aspect ratio of 21:9. A cropped image may be provided in a form of a PIP.

When the 21:9 signal reception device displays 16:9 video, pillarboxes may be inserted into right and left sides, or an image may be scaled to crop and display upper and lower regions. However, when the display method illustrated in FIG. 8 is used, the signal reception device may not insert 16:9 pillarboxes/letterboxes or may not crop a whole image. The signal reception device may display 16:9 video from an upper left side or an upper right side, insert close-up video cropped using crop coordinates into a remaining region, and display the video.

The crop region may be selected through check boxes in a surplus region in the signal reception device as in scheme 1. Alternatively, the crop region may be selected by the user using a scroll bar as in scheme 2. Alternatively, the crop region may be selected by being clicked using a remote controller, etc. in a part in which UHD main video is output or by being dragged to the surplus region as in scheme 3.

The 21:9 signal reception device may display the 16:9 video and display the cropped zoomed-in ROI in the surplus region into which the pillarboxes have been inserted. In other words, the signal reception device may efficiently use the display surplus region without a separate decoder.

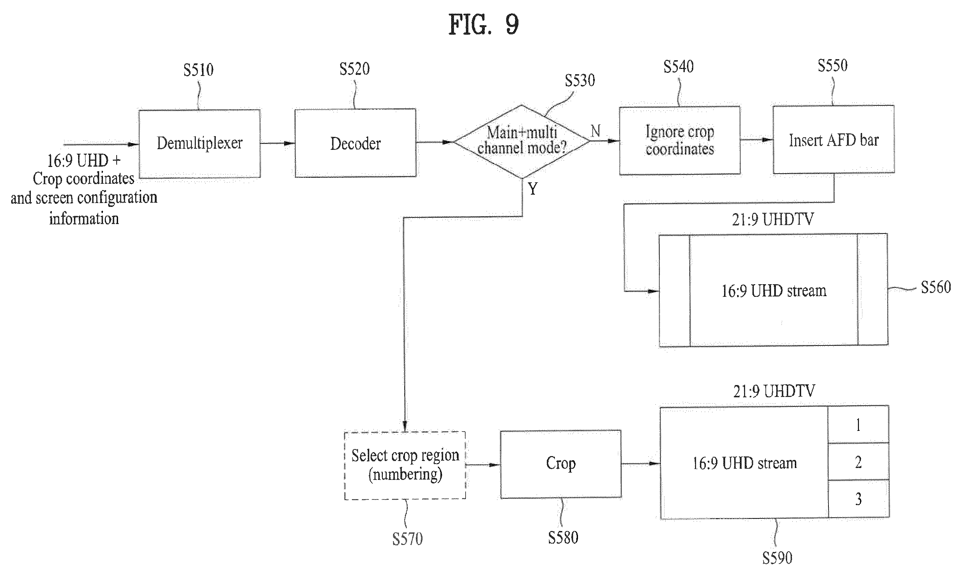

FIG. 9 illustrates a method of displaying cropped video in a surplus region of a 21:9 signal reception device according to an embodiment of the present invention.

Referring to FIG. 9, in S510, the signal reception device may demultiplex a received stream including video data and signaling information including crop information. In S520, the signal reception device may decode the demultiplexed signaling information and the video data included in the video stream. The signal reception device may decode a UHD video stream and signaling information including N pairs of crop coordinates. N or more pairs of crop coordinates may be included. The number of pairs of crop coordinates may be determined by a signal transmission device. The crop information may include numbering information for arranging a plurality of pairs of crop coordinates. The signal reception device may extract information about a crop region from the decoded signaling information. In other words, when at least one pairs of crop coordinates and a plurality of pairs of crop coordinates are included, the information about the crop region may include the numbering information for arranging the plurality of pairs of crop coordinates.

In S530, the signal reception device may determine whether the signal reception device is in a main and multi-channel simultaneous mode. When the signal reception device is not in the main and multi-channel simultaneous mode, the signal reception device may ignore the crop coordinates in S540. In S550, the signal reception device may insert an AFD bar. In S560, the signal reception device may display 16:9 video into which the AFD bar is inserted in a 21:9 display region.

When the signal reception device is in the main and multi-channel simultaneous mode, the signal reception device may select the crop region in S570. The crop region may be selected using the numbering information. In S580, the signal reception device may crop the selected region. The signal reception device may crop at least one region of the decoded video data using the extracted information about the crop region.

In S590, the signal reception device may dispose the 16:9 video and a cropped ROI using screen configuration information. For example, the signal reception device may display the 16:9 video from an upper left side or an upper right side. The signal reception device may crop N ROIs using coordinate information. The signal reception device may display cropped video in a remaining region according to reconfiguration information received together with the coordinate information. In other words, when an aspect ratio of a display region is 21:9, the signal reception device may divide the display region into a main region and an additional region to output the decoded video data in the main region and output the at least one cropped region in the additional region.

The signal reception device may receive 16:9 UHD video and several pairs of crop coordinates, and display an ROI in a left or right surplus region of the 21:9 display region. The ROI may be selected by the user, and changed using a scroll bar, a check box, etc. In addition, the signal reception device may display the crop region in a video screen, and the ROI may be selected using a remote controller, etc. A 16:9 signal reception device may ignore the crop coordinates and other information, and display only the UHD video.

Therefore, the present embodiment may efficiently use the display region of the 21:9 signal reception device.

The signal transmission device may transmit the video stream and the crop coordinates, and transmit the screen configuration information using separate signaling information. Alternatively, the signal transmission device may transmit the video stream and the crop coordinates, and transmit the screen configuration information identified by an identifier (ID) according to an embodiment such that the signal reception device can appropriately combine the information and configure a screen.

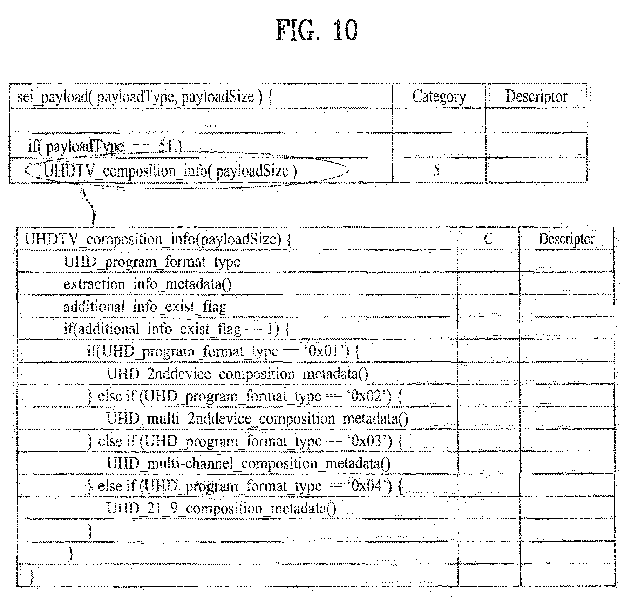

FIG. 10 illustrates supplemental enhancement information (SEI) signaling information according to an embodiment of the present invention.

An SEI message may include information necessary to reproduce bit strings of video data from the middle. For example, the SEI message may include information about a decoding start position and a display start image. Basic information about the SEI message is omitted from FIG. 10, and FIG. 10 only describes a method of transmitting crop coordinate information and screen configuration information identified by an ID.

Meanwhile, as an example, a codec stream may include a network abstraction layer (NAL) for efficient transmission of video content. The NAL may include an NAL unit and a payload. A raw byte sequence payload (RBSP) may be positioned in the payload.

UHD processing information may be received through an SEI RBSP. The UHD processing information may be included in a video stream. A signal reception device may parse an advance video coding (AVC) or HEVC NAL unit. The signal reception device may read a UHDTV composition info SEI message by verifying whether an NAL unit type value is a value corresponding to SEI data and whether a payload type corresponds to 51. The signal reception device may decode UHDTV composition info to acquire UHD configuration information, extraction information, etc. of a current video stream.

When an additional info exist flag is 1, the signal reception device may parse composition metadata to identify an additional screen configuration. When the additional info exist flag is not 1, the signal reception device may arbitrarily operate by identifying only a UHD program format type field according to an ID. The signal reception device may use this information to recognize configuration information using a UHD stream, coordinate information for cropping, etc., and transmit video data to a second terminal device.

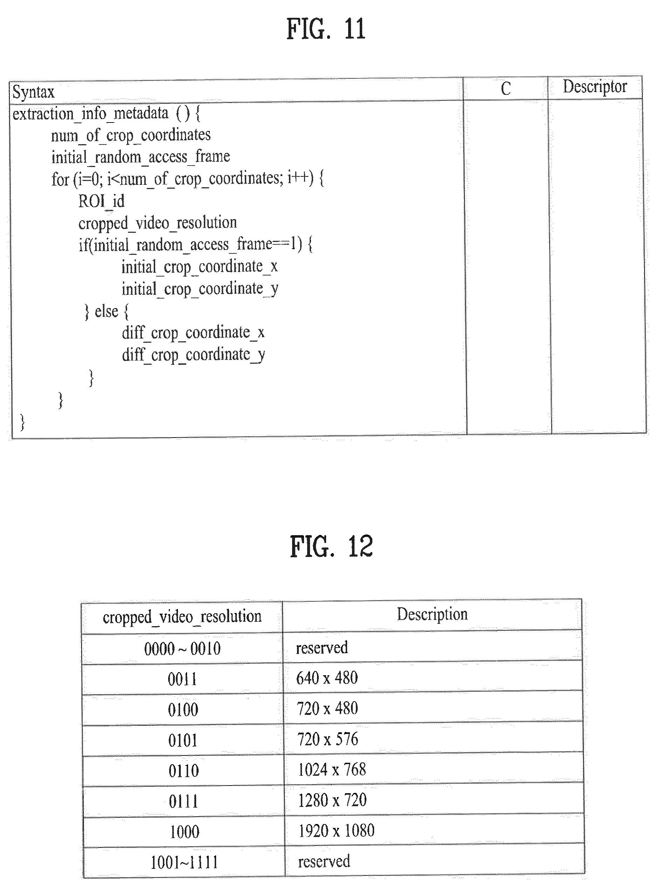

FIG. 11 illustrates a method of signaling cropped video information according to an embodiment of the present invention.

The cropped video information (or information about a crop region) may include information about the number of crop regions and information indicating whether a frame corresponds to a first frame, and include information indicating reference coordinates of the crop region. Alternatively, the cropped video information may include information indicating a difference value with respect to the reference coordinates.

Specific information of extraction info metadata included in the screen configuration information is as below.

A num_of_crop_coordinates field indicates the number of cropped regions. In other words, when a signal transmission device transmits four ROIs, num_of crop_coordinates corresponds to 4.

An initial_random_access_frame field indicates whether a frame is a first frame decoded to a random access point (RAP). In other words, when the initial_random_access_frame field corresponds to 1, the field indicates the first frame. The signal transmission device may transmit coordinate information only in a case of initial_random_access_frame using a value of the initial_random_access_frame field, and transmit only a difference value in the coordinate information from a subsequent frame. The signal transmission device may allocate close intervals of initial_random_access_frame in order to transmit an accurate value of crop_coordinate_x,y. In other words, the signal transmission device may adjust a transmission interval of crop coordinate information.

A croppcd_video_resolution field indicates a resolution of video of the crop region. The resolution may vary according to the crop region. In addition, aspect ratio information may be determined based on horizontal and vertical resolution information. A horizontal to vertical ratio of pixels of a UHDTV may correspond to 1:1.

An initial_crop_coordinate_x field and an initial_crop_coordinate_y field indicate upper left coordinate values for cropping a region in a rectangular shape (or middle coordinate values of the crop region or other corner coordinate values). The initial_crop_coordinate_x field and the initial_crop_coordinate_y field are needed only when the initial_random_access_frame field corresponds to 1. In other words, a signal reception device (sync device or UHDTV) may transmit and output only a designated region using a coordinate field, and may crop and discard a remaining region.

A diff_crop_coordinate_x field and a diff_crop_coordinate_y field indicate a difference value between an initial_crop_cordinate_x field and an initial_crop_coordinate_y field. When initial_random_access_frame corresponds to 0 (when a frame is not initial_random_access_frame), the signal transmission device may transmit a difference value based on values of the initial_crop_coordinate_x field and the initial_crop_coordinate_y field. The signal transmission device may transmit a start point (or a middle point or an end point) of the crop region. The diff_crop_coordinate_x field and the diff_crop_coordinate_y field may be transmitted in every frame except for an initial random access frame. The signal reception device (sync device or UHDTV) may transmit and output only a designated region using a coordinate difference value field, and may crop and discard a remaining region.

In some cases, the signal transmission device may omit transmission of coordinates for a particular ROI in the middle. In this instance, diff_crop_coordinate_x and diff_crop_coordinate_y may be regarded as 0. In other words, the signal reception device may maintain the same coordinates as that of a previous frame. In addition, an ROI may be terminated or generated based on each RAP. In other words, an ROI which is not specified at a point in time of the RAP is an ROI which is not present. A video signal output from a second terminal device may continuously correspond to an existing signal.

FIG. 12 illustrates a method of signaling resolution information of cropped video according to an embodiment of the present invention.

A cropped_video_resolution field indicates a resolution of video of a cropped region. The resolution may vary according to the cropped region. In addition, aspect ratio information may be determined based on horizontal and vertical resolution information. A horizontal to vertical ratio of pixels of a UHDTV may correspond to 1:1.

As an example, when a value of the cropped_video_resolution field is 0011, the value may indicate that a resolution of a crop region is 640x480. When the field has a value of 0100, the value may indicate a resolution of 720x480. When the field has a value of 0101, the value may indicate a resolution of 720x576. When the field has a value of 0110, the value may indicate a resolution of 1024x768. When the field has a value of 0111, the value may indicate a resolution of 1280×720. When the field has a value of 1000, the value may indicate a resolution of 1920x1080.

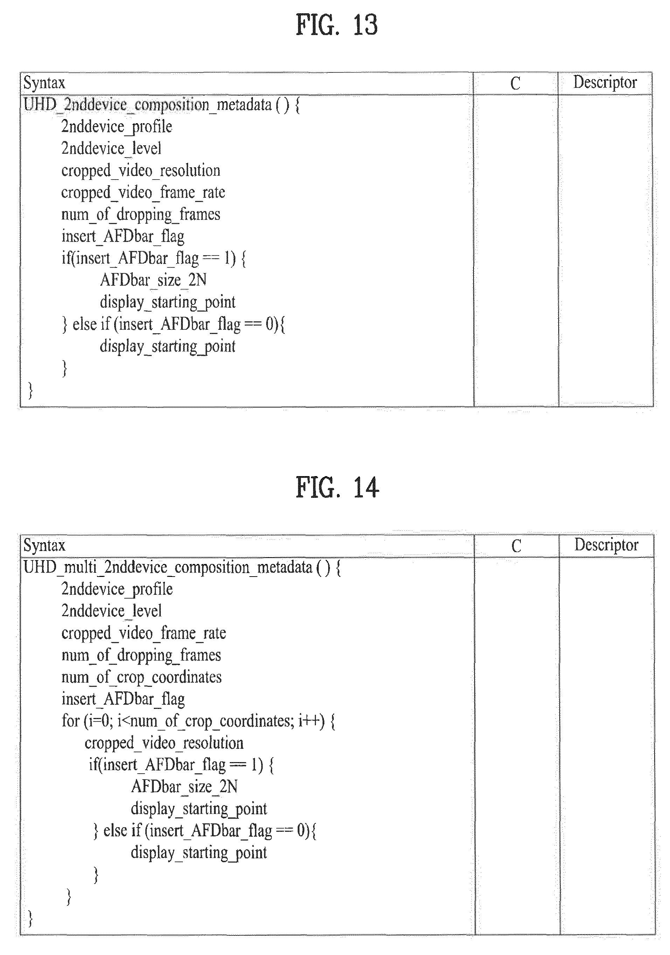

FIG. 13 illustrates a method of signaling information for displaying cropped video on a second terminal device according to an embodiment of the present invention.

As an example, a signal transmission/reception device may crop one region, and set a service type, in which a cropped region is displayed on the second terminal device, to 0x01. FIG. 13 illustrates an example of signaling information when 0x01 is selected as the service type. Each field is described below.

A 2nd device_profile field may include information about a type of the second terminal device. The 2nd device_profile field may vary according to type of the second terminal device (target device). A criterion of classifying profiles may correspond to a resolution. Alternatively, another criterion may be applied. As an example, referring to the 2nd device_profile field, a Phone-1 type may be configured as a small screen profile, a tablet-1 type or a phone-2 (advanced) type may be configured as a medium screen profile, or a tablet-2 (advanced) type may be configured as a large screen profile.

A 2nd device_level field indicates a level at which display can be performed on the second terminal device and a maximum level at which transmission can be performed through an interface.

A cropped_video_resolution field indicates a resolution of video of the cropped region. The resolution may vary according to the cropped region. In addition, aspect ratio information may be determined based on horizontal and vertical resolution information. A horizontal to vertical ratio of pixels of a UHDTV may correspond to 1:1. The cropped_video_resolution field may have the same resolution information as that of an extraction_info_metadata field.

A cropped_video_frame_rate field may indicate a frame rate of cropped video.

A num_of_dropping_frames field is a field for adjusting a frame rate through cropped_video_frame_rate information and level information received from the second terminal device. For example, when a frame rate of cropped video is 120 Hz, and a level at which display can be performed on the second terminal device is 1080p30, a signal reception device may select a frame for each 30/120 and transmit the selected frame to the second terminal device.
insert_AFDbar_flag is a flag for determining whether a pillarbox/letterbox is inserted. When the flag has a value of 1, the pillarbox/letterbox is inserted. When the flag has a value of 0, the pillarbox/letterbox is not inserted.

An AFDbar_size_2N field is a field related to insertion of the pillarbox/letterbox. When the insert_AFDbar_flag has a value of 1, the signal reception device may verify the AFDbar_size_2N field, and insert the pillarbox/letterbox. The signal reception device may insert a pillarbox/letterbox corresponding to a size obtained by dividing a value of AFDbar_size_2N by 2 from a point at which a value of a y-axis of a display screen is 0, and insert a pillarbox/letterbox from a point at which a value of the y-axis of the display screen is {size of the y-axis of the display screen - (AFDbar_size_2N)/2}.

A display_starting_point field may indicate a point at which video starts. When insert_AFDbar_flag has a value of 1, a point at which a value of the y-axis is (AFDbar_size_2N)/2 corresponds to display_starting_point. When insert_AFDbar_flag has a value of 0, a point at which a value of the y-axis is 0 corresponds to display_starting_point.

FIG. 14 illustrates a method of signaling information for performing display on a second terminal device when a plurality of videos is cropped according to an embodiment of the present invention.

As an example, a signal transmission/reception device may crop one of a plurality of regions, and set a service type, in which the cropped region is displayed on the second terminal device, to 0x02. FIG. 14 illustrates an example of signaling information when 0x02 is selected as the service type. Each field is described below.

A 2nd device_profile field may include information about a type of the second terminal device. The 2nd device_profile field may vary according to type of the second terminal device (target device). A criterion of classifying profiles may correspond to a resolution. Alternatively, another criterion may be applied. As an example, referring to the 2nd device_profile field, a Phone-1 type may be configured as a small screen profile, a tablet-1 type or a phone-2 (advanced) type may be configured as a medium screen profile, or a tablet-2 (advanced) type may be configured as a large screen profile.

A 2nd device_level field indicates a level at which display can be performed on the second terminal device and a maximum level at which transmission can be performed through an interface.

A cropped_video_frame_rate field may indicate a frame rate of cropped video.

A num_of_dropping_frames field is a field for adjusting a frame rate through cropped_video_frame_rate information and level information received from the second terminal device. For example, when a frame rate of cropped video is 120 Hz, and a level at which display can be performed on the second terminal device is 1080p30, a signal reception device may select a frame for each 30/120 and transmit the selected frame to the second terminal device.

A numof_crop_coordinates field indicates the number of cropped regions. That is, when a signal transmission device transmits four ROIs, num_of_crop_coordinates corresponds to 4. The num_of_crop_coordinates field may have the same information as that of extraction_info_metadata.

A cropped_video_resolution field indicates a resolution of video of the cropped region. The resolution may vary according to the cropped region. In addition, aspect ratio information may be determined based on horizontal and vertical resolution information. A horizontal to vertical ratio of pixels of a UHDTV may correspond to 1:1. The cropped_video_resolution field may have the same resolution information as that of an extraction info_metadata field.

insert_AFDbar flag is a flag for determining whether a pillarbox/letterbox is inserted. When the flag has a value of 1, the pillarbox/letterbox is inserted. When the flag has a value of 0, the pillarbox/letterbox is not inserted.

An AFDbar_size_2N field is a field related to insertion of the pillarbox/letterbox. When insert_AFDbar_flag has a value of 1, the signal reception device may verify the AFDbar_size_2N field, and insert the pillarbox/letterbox. The signal reception device may insert a pillarbox/letterbox corresponding to a size obtained by dividing a value of AFDbar_size_2N by 2 from a point at which a value of a y-axis of a display screen is 0, and insert a pillarbox/letterbox from a point at which a value of the y-axis of the display screen is {size of the y-axis of the display screen - (AFDbar_size_2N)/2}.

A display_starting_point field may indicate a point at which video starts. When insert_AFDbar_flag has a value of 1, a point at which a value of the y-axis is (AFDbar_size_2N)/2 corresponds to display_starting_point. When insert_AFDbar_flag has a value of 0, a point at which a value of the y-axis is 0 corresponds to display_starting_point.

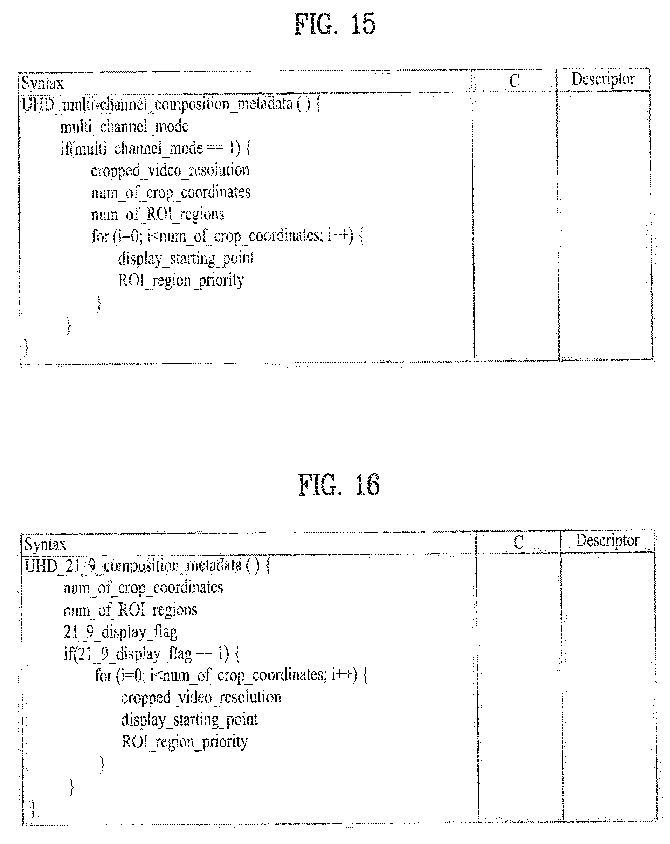

FIG. 15 illustrates a method of signaling information for reconfiguring and displaying a plurality of cropped videos according to an embodiment of the present invention.

As an example, a signal transmission/reception device may crop at least one region, reconfigure a cropped image, and set a service type, in which display is performed on a signal reception device, to 0x03. FIG. 15 illustrates an example of signaling information when 0x03 is selected as the service type.

A multi_channel_mode field indicates whether to switch to a multi-channel mode. Upon receiving input instructing switching to the multi-channel mode, the signal reception device may display cropped video. When the signal reception device is not instructed to switch to the multi-channel mode, the signal reception device may ignore crop coordinates and perform display.

A cropped_video_resolution field indicates a resolution of video of a crop region. The resolution may vary according to the crop region. In addition, aspect ratio information may be determined based on horizontal and vertical resolution information. A horizontal to vertical ratio of pixels of a UHDTV may correspond to 1:1. The cropped_video_resolution field may have the same information as that of extraction_info_metadata.

A num_of_crop_coordinates field may be the same as num_of_crop_coordinates of UHD_2nd device_composition_metadata () of FIG. 13. In other words, the field indicates the number of all cropped regions and thus may include candidates. In addition, the field may indicate an order of priority when the cropped regions are displayed.

A num of_ROI_regions field may indicate the number of ROIs to be displayed at one time on the signal reception device.

A display_starting_point field may indicate start points such that cropped videos may be divided in the signal reception device and displayed.

An ROI_region_priority field may assign a priority to each ROI. An ROI to be displayed may be selected from among a plurality of ROIs. For example, when num_of ROI_regions has a value of 4, ROIs, ROI_region_priority of which corresponds to 1 to 4, may be displayed among the plurality of ROIs.

FIG. 16 illustrates a method of signaling information for displaying video cropped in a surplus region of a 21:9 signal reception device according to an embodiment of the present invention.

As an example, a signal transmission/reception device may set a service type, in which main video and cropped video are displayed together, to 0x04. FIG. 16 illustrates an example of the signaling information when 0x04 is selected as the service type. Each field is described below.

A num_of_crop_coordinates field indicates the number of cropped regions. In other words, when a signal transmission device transmits four ROIs, num_of_crop_coordinates corresponds to 4. The num_of_crop_coordinates field may have the same information as that of extraction info_metadata.

A num_of_ROI_regions field may indicate the number of ROIs which can be displayed at one time on the signal reception device.

21_9_display_flag indicates whether an image is configured as an image to be finally displayed on a 21:9 screen.

A cropped_video_resolution field indicates a resolution of video of the cropped region. The resolution may vary according to the cropped region. In addition, aspect ratio information may be determined based on horizontal and vertical resolution information. A horizontal to vertical ratio of pixels of a UHDTV may correspond to 1:1. The cropped-Video-resolution field may have the same information as that of extraction_info_metadata.

A display_starting_point field may indicate start points such that cropped videos may be divided in the signal reception device and displayed. Alternatively, display_section_number may be signaled by allocating the number of regions instead of the display_starting_point field.

An ROI_region_priority field may assign a priority to each ROI. An ROI to be displayed may be selected from among a plurality of ROIs. For example, when num_of_ROI_regions has a value of 4, ROIs, ROI_region_priority of which corresponds to 1 to 4, may be displayed among the plurality of ROIs.

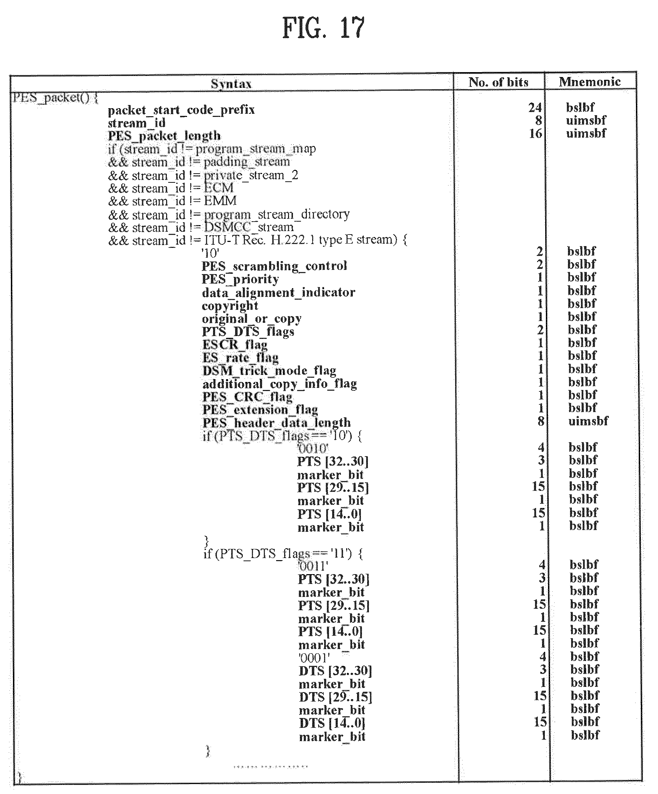

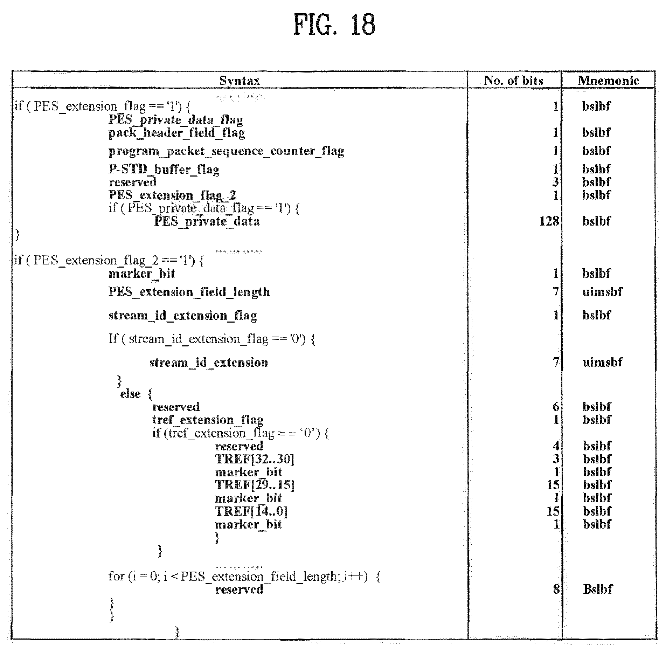

FIGS. 17 and 18 illustrate an example of a packetized elementary stream (PES) packet.

A signal reception device may collect transport stream (TS) packets having the same PID to restore original data. When the original data corresponds to a PES, the signal reception device may extract video ES data from the PES.

FIG. 17 illustrates that respective videos can be synchronized with each other through a signal of a presentation time stamp (PTS) or a decoding time stamp (DTS) included in the PES packet when several videos are extracted from one stream.

Main fields included in the PES packet of FIGS. 17 and 18 are described below. FIGS. 17 and 18 illustrate one PES packet, and thus FIGS. 17 and 18 will be described together.
packet_start_code_prefix is a 24-bit field, and indicates a start of the PES packet.
stream_id is an 8-bit field, and identifies a type of an ES transmitted as a PES.

PES_packet_length is a 16-bit field, and indicates the number of bytes of subsequent data.

PES_scrambling_control is a 2-bit field, and indicates whether a PES packet payload is scrambled.

PTS_DTS_flags indicates whether PTS or DTS information is included in the PES. When PTS_DTS_flags has a value of 10, the PTS information is included in a PES packet header. When PTS_DTS_flags has a value of 11, the PTS information and the DTS information are included in the packet header. When PTS_DTS_flags has a value of 00, nothing is present. A value of 01 is not used.

PES_extension_flag indicates whether the PES is extended. When PES_extension_flag has a value of 1, PES extension is included in the PES packet header. PES_extension_flag is used to verify PES_private_data_flag.

PES_header_data_Iength is an 8-bit field, and indicates the total number of bytes of subsequent selective infonnation.

The PTS is information about time when display is actually performed. For example, the PTS may be calculated to be PTS(j) = ((system clock frequency * reproduced time)/300)%2^33.

The DTS is information about time when decoding is actually performed. It is possible to verify whether the DTS is an initial frame corresponding to random_access_point.
marker_bit is 1 bit, and is used to check validity of data.

PES_private_data is a 16-byte field, and may include private data. A signal transmission device may include, in private_data, and transmit crop region extraction information (for example, extraction_info_metadata) of configuration information (for example, UHDTV_composition_info(payloadSize)) included in the SEI message described with reference to FIG. 10, screen configuration information for each service type (for example, UHD_XX_composition_metadata) described with reference to FIGS. 13 to 16, etc.

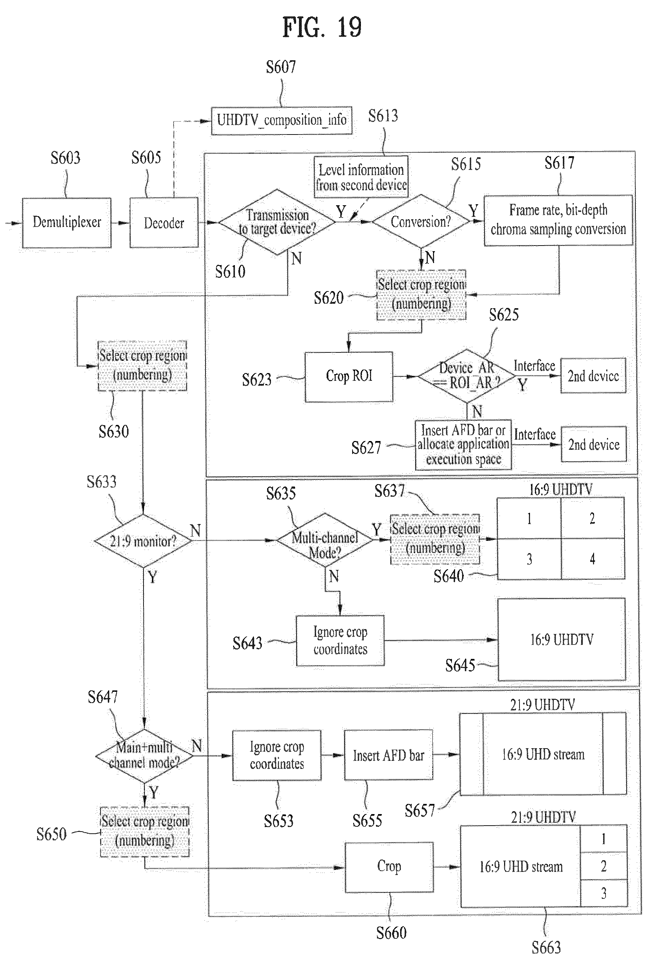

FIG. 19 illustrates a method of processing and displaying cropped video according to an embodiment of the present invention.

A signal reception device may receive a stream including UHD video data and signaling information including crop information such as crop coordinates from a signal transmission device.

In S603, the signal reception device may demultiplex the received stream including the video data and the signaling information including the crop information. In S605, the signal reception device may decode the demultiplexed signaling information and the video data included in the video stream. The signaling information may include video configuration information. In S607, the signal reception device may parse the video configuration information from the signaling information. The video configuration information may include a type of a displayed service and crop information. The signal reception device may extract information about a crop region from the decoded signaling information.

In S610, the signal reception device may determine whether to transmit data to a second terminal device (target device). When the signal reception device determines to transmit data to the second terminal device, the signal reception device may determine whether the video data is converted in S615. In S613, the signal reception device may receive level information from the second terminal device before determining whether the video data is converted. The signal reception device may determine whether the video data is converted based on the received level information. In S617, the signal reception device may convert frame rate, bit depth, and chroma sampling values by detecting interface information and a maximum displayable specification of the second terminal device.

In S620, the signal reception device may select at least one crop region from among a plurality of regions. For example, the signal reception device may display a UI for selecting a desired region and receive input of a selection command from the user. Alternatively, the second terminal device may display a UI for selecting a desired region and receive input of a selection command from the user. In some cases, the signal reception device may display a region that can be cropped on a screen, and select one crop region according to a selection command of the user using a remote controller, etc.

In S623, the signal reception device may crop a selected ROI using crop coordinate information. In S625, the signal reception device may determine whether an aspect ratio (Device_AR) of the second terminal device is the same as an aspect ratio (ROI AR) of the cropped ROI. The aspect ratio of the second terminal device may be determined using resolution information transmitted from the second terminal device. In addition, the aspect ratio of the cropped ROI may be calculated from crop information transmitted from the signal transmission device.

When the aspect ratio of the second terminal device is the same as the aspect ratio of the cropped ROI, the signal reception device may transmit the decoded and cropped video data to the second terminal device through an interface. The second terminal device may output the received video data without change.

When the aspect ratio (Device_AR) of the second terminal device is not the same as the aspect ratio (ROI_AR) of the cropped ROI, the signal reception device may insert an AFD bar or allocate a surplus space for additional execution in S627. The signal reception device may transmit the decoded and cropped video to the second terminal device through the interface. The second terminal device may display the received video.

When the crop region is displayed on one display device without the second terminal device (target device), the crop region may be selected in S630. In some cases, the crop region may be selected in S637 after a multi-channel mode is selected, or the crop region may be selected in S650 after a main and multi-channel simultaneous mode is selected.

In S633, the signal reception device may verify whether a display screen has an aspect ratio of 21:9. When the aspect ratio is not 21:9, the signal reception device may determine whether the signal reception device is in the multi-channel mode in S635. When the signal reception device is in the multi-channel mode, the signal reception device may crop the screen into a 16:9 HD screen using received M pairs of crop coordinates and display the cropped screen in S640. The signal reception device may display N divided crop region videos in a designated region of the screen of the signal reception device.

When the signal reception device is not in the multi-channel mode, the signal reception device may ignore the crop coordinates in S643. In S645, the signal reception device may display only 16:9 UHD video.

When the aspect ratio is 21:9, the signal reception device may determine whether the signal reception device is in the main and multi-channel simultaneous mode in S647. When the signal reception device is not in the main and multi-channel simultaneous mode, the signal reception device may ignore the crop coordinates in S653. In S655, the signal reception device may insert an AFD bar. In S657, the signal reception device may display 16:9 video into which the AFD bar is inserted in a 21:9 display region.

When the signal reception device is in the main and multi-channel simultaneous mode, the signal reception device may select a region and crop the region in S660. In S663, the signal reception device may dispose the 16:9 video and a cropped ROI using screen configuration information.

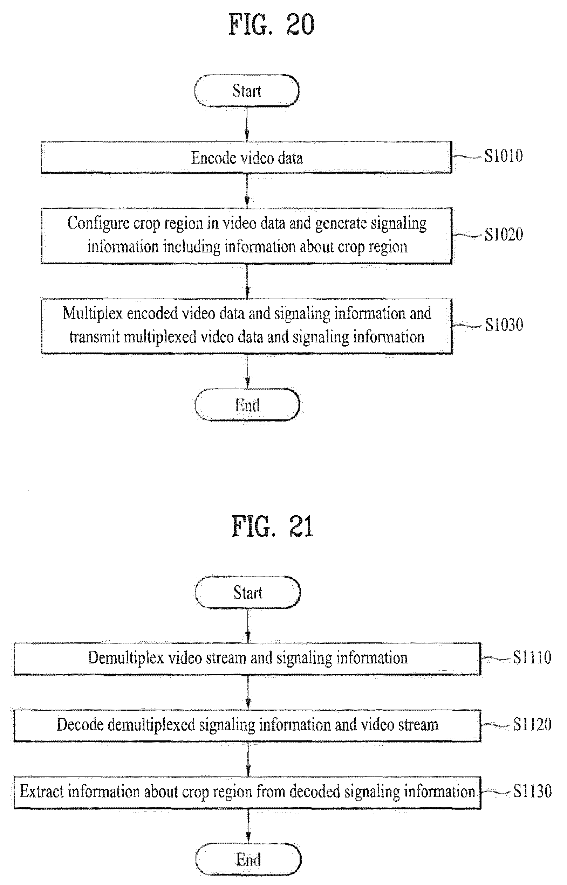

FIG. 20 illustrates a method of controlling a signal transmission device according to an embodiment of the present invention.

Referring to FIG. 20, the signal transmission device may encode video data in S1010. In S1020, the signal transmission device may configure a crop region in the video data, and generate signaling information including information about the crop region. The signaling information may include video configuration information. The video configuration information may include crop information and display service type information. For example, the crop information may correspond to crop coordinates, the number of crop regions, initial coordinates, a difference value between coordinates, etc. The display service type information may correspond to one of a service of transmitting the crop region to a second terminal device, a service of reconfiguring and displaying only the crop region, and a service of simultaneously displaying main video and crop video.

In S1030, the signal transmission device may multiplex the encoded video data and the signaling information, and transmit the multiplexed video data and signaling information. Examples of each display service type and the signaling information have been described above, and thus will be omitted.

FIG. 21 illustrates a method of controlling a signal reception device according to an embodiment of the present invention.

Referring to FIG. 21, the signal reception device may demultiplex a stream including video data and signaling information in S 1110.

In S1120, the signal reception device may decode the demultiplexed signaling information and the video data. The signaling information may include video configuration information. The video configuration information may include crop information and display service type information.

In S1130, the signal reception device may extract information about a crop region from the decoded signaling information. The signal reception device may crop video using the extracted crop region information. The signal reception device may display the crop region according to the service type information or transmit the crop region to a second terminal device.

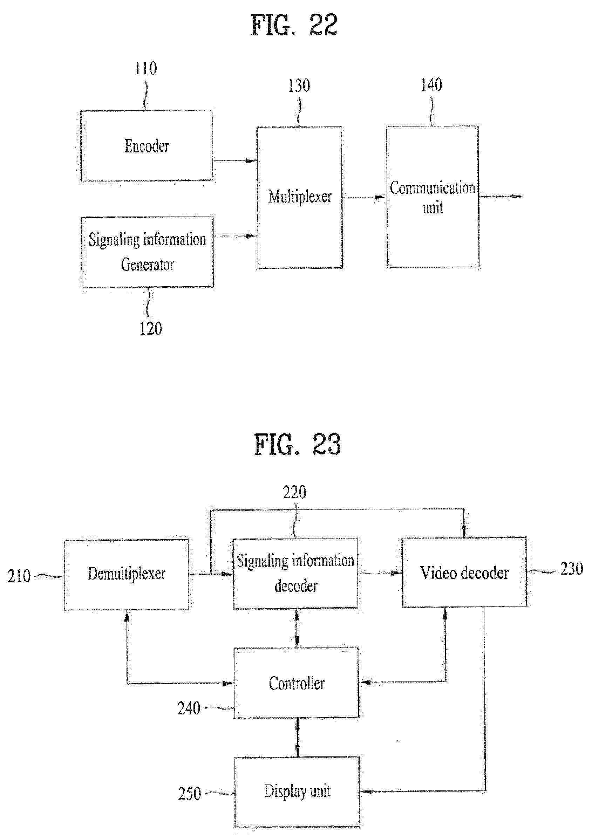

FIG. 22 illustrates a signal transmission device according to an embodiment of the present invention.

Referring to FIG. 22, the signal transmission device includes an encoder 110, a signaling information generator 120, a multiplexer 130, and a communication unit 140.

The encoder 110 may encode video data. The signaling information generator 120 may configure crop region in the video data, and generate signaling information including information about the crop region. Meanwhile, the encoder 110 and the signaling information generator 120 may be included in a controller (not illustrated). The signaling information may include video configuration information and information according to a display service type. The video configuration information may include crop information.

The information about the crop region may include information indicating the number of crop regions and whether a frame is an initial frame, and include information indicating reference coordinates of the crop region or information indicating a difference value with respect to the reference coordinates. The signaling information may further include information about an AFD bar to be inserted into video.

The multiplexer 130 may multiplex the encoded video data and the signaling information. The communication unit 140 may transmit the multiplexed video data and signaling information.

FIG. 23 illustrates a signal reception device according to an embodiment of the present invention.

Referring to FIG. 23, the signal reception device includes a demultiplexer 210, a signaling information decoder 220, a video decoder 230, a controller 240, and a display unit 250.

The demultiplexer 210 may demultiplex a stream including video data and signaling information.

The signaling information decoder 220 may decode the demultiplexed signaling information.

The video decoder 230 may decode the video data in the demultiplexed stream.

The controller 240 may extract information about a crop region from the decoded signaling information. The information about the crop region may include information about the number of crop regions and information indicating whether a frame corresponds to a first frame, and include information indicating reference coordinates of the crop region or information indicating a difference value with respect to the reference coordinates.

The controller 240 may crop the decoded video data using the extracted information about the crop region. For example, the crop region may be identified using initial coordinates, and identified using a difference value in a subsequent frame. A plurality of crop regions may be configured.

The controller 240 may compare received aspect ratio information with an aspect ratio of the crop region, and insert an AFD bar into a predetermined region when the received aspect ratio information is different from the aspect ratio of the crop region. Alternatively, the controller 240 may configure video to be displayed as a particular region, and configure a remaining region as an additional application space.

The controller 240 may convert a format of the video data based on received display information of a second terminal device. The format of the video data may include at least one of frame rate, bit depth, and chroma sampling.

The controller 240 may control the display unit 250 to output a selection screen for selecting at least one crop region from among the plurality of crop regions. The controller 240 may perform a control operation to transmit the selected crop region to the second terminal device, and to reconfigure and display the screen.

The controller 240 may crop at least one region of the decoded video data using the extracted information about the crop region, and perform a control operation to divide the display unit 250 and output the at least one cropped region when an aspect ratio is 16:9. The controller 240 may crop at least one region of the decoded video data using the extracted information about the crop region, and perform a control operation to divide the display unit 250 into a main region and an additional region to output the decoded video data in the main region and output the at least one cropped region in the additional region when the aspect ratio is 21:9.

The display unit 250 may display received video.

The signal reception device may further include a communication unit (not illustrated). The communication unit may receive the display information of the second terminal device including aspect ratio information. The display information may refer to a maximum displayable specification of the second terminal device. For example, the displayable specification may correspond to resolution, frame rate, etc. For example, the communication unit may correspond to a high definition multimedia interface (HDMI), wireless HD (WiHD), Wireless Gigabit (WiGig), a wireless display, HDBaseT, etc. The communication unit may be expressed as an interface to be distinguished from a broadcast signal communication unit. The communication unit may transmit the cropped region of the decoded video data to the second terminal device.

The configurations and methods of the above-described embodiments are not restrictively applied to the signal transmission/reception device, and the method of controlling the signal transmission/reception device according to the present invention. All or some embodiments may be selectively combined and configured such that the embodiments can be variously modified.

In addition, although preferred embodiments of the present invention have been illustrated and described, it should be noted that the present invention is not restricted to a particular embodiment described above, and may be variously modified by those skilled in the art within the scope of the appended claims and their equivalents. In addition, the modified embodiments should not be understood separately from the technical spirit or view of the present invention.

### [Industrial Applicability]

The present invention is applicable to a broadcast and video signal processing field and is reproducible.

## Claims

1. A method of controlling a signal reception device, comprising:
demultiplexing a stream including video data and signaling information;
decoding the demultiplexed signaling information and the video data; and
extracting information about a crop region from the decoded signaling information.

2. The method according to claim 1, wherein the information about the crop region includes information indicating the number of crop regions and whether a frame is an initial frame, and includes information indicating reference coordinates of the crop region or information indicating a difference value with respect to the reference coordinates.

3. The method according to claim 1, further comprising:
receiving display information of a second terminal device including aspect ratio information;
cropping the decoded video data using the extracted information about the crop region; and
transmitting a cropped region of the decoded video data to the second terminal device.

4. The method according to claim 3, further comprising
comparing the received aspect ratio information with an aspect ratio of the crop region, and inserting an AFD bar into a predetermined region when the received aspect ratio information is different from the aspect ratio of the crop region.

5. The method according to claim 3, further comprising
converting a format of the video data based on the received display information of the second terminal device.

6. The method according to claim 5, wherein the format of the video data includes at least one of frame rate, bit depth, and chroma sampling values.

7. The method according to claim 3, wherein a plurality of crop regions is present,
wherein the method further comprises outputting a selection screen for outputting one crop region from among the plurality of crop regions.

8. The method according to claim 1, further comprising
cropping at least one region of the decoded video data using the extracted information about the crop region; and
dividing a display unit when an aspect ratio of the display unit is 16:9, and displaying the at least one cropped region.

9. The method according to claim 1, further comprising:
cropping at least one region of the decoded video data using the extracted information about the crop region; and
outputting the decoded video data and the at least one cropped region,
wherein the outputting comprises dividing a display unit into a main region and an additional region to output the decoded video data in the main region and output the at least one cropped region in the additional region when an aspect ratio of the display unit is 21:9.

10. A method of controlling a signal transmission device, comprising:
encoding video data;
configuring a crop region in the video data to generate signaling information including information about the crop region; and
multiplexing the encoded video data and the signaling information, and transmitting the multiplexed video data and signaling information.

11. A signal reception device, comprising:
a demultiplexer for demultiplexing a stream including video data and signaling information;
a signaling information decoder for decoding the demultiplexed signaling information;
a video decoder for decoding the video data in the demultiplexed stream;
a controller for extracting information about a crop region from the decoded signaling information; and
a display unit.

12. The signal reception device according to claim 11, wherein the information about the crop region includes information indicating the number of crop regions and whether a frame is an initial frame, and includes information indicating reference coordinates of the crop region or information indicating a difference value with respect to the reference coordinates.

13. The signal reception device according to claim 11, further comprising
a communication unit for receiving display information of a second terminal device including aspect ratio information,
wherein the controller crops the decoded video data using the extracted information about the crop region, and
the communication unit transmits a cropped region of the decoded video data to the second terminal device.

14. The signal reception device according to claim 13, wherein the controller compares the received aspect ratio information with an aspect ratio of the crop region, and inserts an AFD bar into a predetermined region when the received aspect ratio information is different from the aspect ratio of the crop region.

15. The signal reception device according to claim 13, wherein the controller converts a format of the video data based on the received display information of the second terminal device.

16. The signal reception device according to claim 15, wherein the format of the video data includes at least one of frame rate, bit depth, and chroma sampling values.

17. The signal reception device according to claim 13, wherein a plurality of crop regions is present,
wherein the controller controls the display unit to output a selection screen for outputting one crop region from among the plurality of crop regions.

18. The signal reception device according to claim 11, wherein the controller
crops at least one region of the decoded video data using the extracted information about the crop region, divides the display unit when an aspect ratio of the display unit is 16:9, and controls the display unit to output the at least one cropped region.

19. The signal reception device according to claim 11, wherein the controller crops at least one region of the decoded video data using the extracted information about the crop region, and divides the display unit into a main region and an additional region to control the display unit to output the decoded video data in the main region and output the at least one cropped region in the additional region when an aspect ratio of the display unit is 21:9.

20. A signal transmission device, comprising:
an encoder for encoding video data;
a signaling information generator for configuring a crop region in the video data, and generating signaling information including information about the crop region;
a multiplexer for multiplexing the encoded video data and the signaling information; and
a communication unit for transmitting the multiplexed video data and signaling information.
